# EUROPEAN PATENT SPECIFICATION

(11) **EP 3 043 512 B1**
(45) Date of publication and mention of the grant of the patent: **01.01.2020**
(21) Application number: 14852023.2
(22) Date of filing: 18.06.2014
(51) Int. Cl.: H04L 12/24, G06F 9/445, G06F 8/654

(54) **FIRMWARE UPGRADE METHOD AND SYSTEM, UPPER COMPUTER AND OPTICAL MODULE**
FIRMWARE-AKTUALISIERUNGSVERFAHREN UND -SYSTEM, ÜBERGEORDNETER COMPUTER UND OPTISCHES MODUL
PROCÉDÉ ET SYSTÈME DE MISE À NIVEAU DE MICROPROGRAMMES, ORDINATEUR SUPÉRIEUR ET MODULE OPTIQUE

(30) Priority: 10.10.2013 CN 201310469841
(43) Date of publication of application: 13.07.2016
(73) Proprietor: ZTE Corporation, Shenzhen, Guangdong 518057 (CN)
(72) Inventor: ZHU, Yamin, Shenzhen Guangdong 518057 (CN); LIU, Shixing, Shenzhen Guangdong 518057 (CN)
(74) Representative: Ligi, Stefano
(86) International application number: PCT/CN2014/080222
(87) International publication number: WO 2015/051647

(56) References cited:
- CN-A- 101 950 253
- CN-A- 102 098 590
- CN-A- 102 195 798
- CN-A- 103 248 424
- GB-A- 2 449 193

## Description

### Technical Field

The present invention relates to the field of remote online upgrade technologies, and more particularly, to a firmware upgrade method and system, an upper computer and an optical module.

### Background of the Related Art

With the increasing maintainability requirements of the optical network devices, the remote online upgrade function has become one of the key demands of optical module products. Currently, the MDIO (Management Data Input/Output) MSA (Multi Source Agreement) only defines the software online upgrade implementation method, but it does not cover other types of firmware upgrade processing methods, namely, the MDIO MSA does not define methods and means applicable to upgrades of different file types.

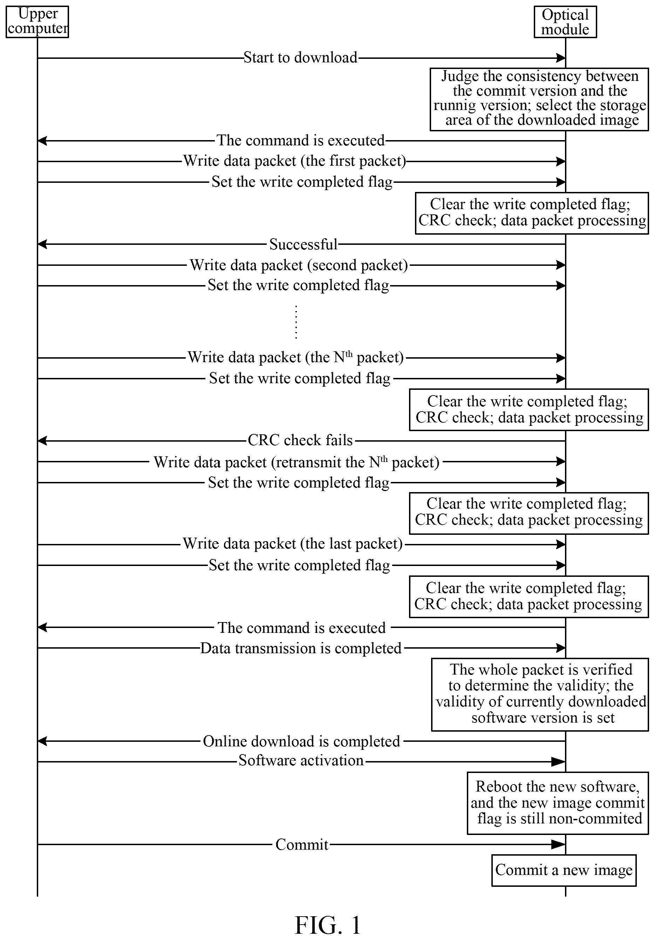

As shown in FIG. 1, FIG. 1 is a timing chart of software online upgrade in the related art, and the software image online upgrade process specified by the MDIO MSA is as follows:
a software image is segmented into a number of data blocks by an upper computer, wherein each data block comprises a data portion and a cyclic redundancy checks (CRC) checksum; the upper computer sends an image download request to the optical module to initiate a software upgrade process, the optical module accepts this request, setting an "upgrade data block ready" flag, and once any errors occur in the process of receiving the current data block, the optical module notifies the upper computer, and the upper computer re-transmits the data block; if the same data block has a plurality of CRC errors, the upper computer forcibly terminates the upgrade process. When all software image data packets are transferred completely, the upper computer sends a download completed command to end the transfer process; the optical module verifies that the entire image has been successfully downloaded through a successfully completed state command. Errors in the download process can be fed back by setting an error state register. After the software image data transfer completes, the upper computer sends a request for running the downloaded image, the optical module executes a trial run of the downloaded software image. After the trial run is successful, the upper computer sends an image default version commit command.

Registers defined by the MSA and used in the above software upgrade process are shown in the following Table 1:

**Table 1**

| Hexadecimal address | Size (byte) | Access Type | Bit | Register Name/Bit Name | Description | Initial Value |
|---|---|---|---|---|---|---|
| B04Ch | 1 | | | Module upgrade data | | 0001h |
| | | Read/ Write | 15 | Upgrade data block ready | This flag is set when the upper computer writes a data block into the 0xBC00 address. When the flag is cleared by the module, the host can write the next data block | 0b |
| | | read | 14∼0 | Maximum upgrade data block size | The module sets the upgrade data block size | 1b |
| | | | | Module upgrade control | | 0000h |
| B04Dh | 1 | Read/ Write | 15∼12 | Upgrade command | 0: No action | 0000b |
| | | | | | 1: Start a download | |
| | | | | | 2: End the download | |
| | | | | | 3: Run the image A | |
| | | | | | 4: Run the image B | |
| | | | | | 5: Terminate the image download | |
| | | | | | 6: Copy the image A to B | |
| | | | | | 7: Copy the image B to A | |
| | | | | | 8: Commit the image A | |
| | | | | | 9: Commit the image B | |
| | | read | 11∼8 | MDIO Upgrade Preparation time | In the software upgrade process, when the host sends a command for running image, the MDIO is unavailable, and it needs to wait. The MDIO upgrade preparation time is the maximum waiting time, and the value is an integer multiple of 5 seconds | 0000b |
| | | read | 7∼0 | Reserved | | 0b |
| | | | | Module upgrade state | | 0000h |
| B051h | 1 | read | 15∼14 | Upgrade command execution state | 00: Idle | 00b |
| | | | | | 01: The command completes successfully | |
| | | | | | 10: The command is in execution | |
| | | | | | 11: The command failes | |
| | | | 13 | The state of service being affected when upgrading to the downloaded image | 0: Upgrading to the current downloaded image will not affect the service | 0b |
| | | | | | 1: Upgrading to the current downloaded image will affect the service | |
| | | | 12 | Image run | 0: Image A | 0b |
| | | | | | 1: Image B | |
| | | | 11∼10 | Image A state | 00: No image | 00b |
| | | | | | 01: There is a valid image | |
| | | | | | 10: There is a damaged image | |
| | | | | | 11: Reserved | |
| | | | 9∼8 | Image B state | 00: No image | 00b |
| | | | | | 01: There is a valid image | |
| | | | | | 10: There is a damaged image | |
| | | | | | 11: Reserved | |
| | | | 7 | Image commit | 0: Image A | 0b |
| | | | | | 1: Image B | |
| | | | 6∼0 | Upgrade command failure reasons | 0: No error | 0b |
| | | | | | 1: CRC checksum error | |
| | | | | | 2: Image length error | |
| | | | | | 3: Flash write operation error | |
| | | | | | 4∼127: Reserved | |

Because the increasing optical module design complexity makes the devices to be more and more diverse, the unity of the online upgrade object type has been unable to meet the remote maintenance requirements. Currently, the online upgrade firmware types involved in the optical module using the MDIO MSA comprise: Micro Control Unit (MCU) software image, Field Programmable Gate Array (FPGA) logic image and core integrated circuit (IC) image and so on. There are differences in different types of firmware upgrade processes, if each type individually uses a customized upgrade method, it will increase the complexity and redundancy of the protocols. Therefore, how to provide a unified online upgrade method for the optical module so that it can simultaneously accommodate different types of firmware upgrades is a problem to be solved.

The document GB 2 449 193 A discloses a compatibility engine arranged to be interfaced with an optical pickup unit of an optical disc drive and operable to manage a read by the optical pickup unit of embedded compatibility information from an optical medium.

### Summary of the Invention

In order to solve the problems in the related art, the embodiment of the present invention provides a firmware upgrade method and system, an upper computer and an optical module.

The embodiment of the present invention provides a firmware upgrade method, and an optical module is configured with a firmware upgrade type identification register, and the firmware upgrade type identification register saves type identifications of firmwares whose upgrade is supported by the optical module, wherein the method comprises:
writing a type identification of a to-be-upgraded firmware into a firmware upgrade type identification register corresponding to the optical module, and judging whether the optical module supports the type of the to-be-upgraded firmware by reading the firmware upgrade state register of the optical module; when determining that the optical module supports the type of the to-be-upgraded firmware, executing a corresponding type of firmware upgrade processing on the optical module.

Preferably, the judging whether the optical module supports the type of the to-be-upgraded firmware by reading the firmware upgrade state register of the optical module comprises:
reading an upgrade command execution state bit in the firmware upgrade state register of the optical module, if the read bit indicates that the command is executed successfully, determining that the optical module supports the upgrade of the firmware whose type corresponds to the written firmware type identification; if the command execution fails, reading an upgrade command execution failure reason register in the firmware upgrade state register of the optical module, if the reason register indicates that the type of the firmware is not supported, determining that the optical module does not support the upgrade of the firmware whose type corresponds to the written firmware type identification.

Preferably, the executing the corresponding type of firmware upgrade processing on the optical module comprises:
sending a download instruction to the optical module, and transferring image data of the to-be-upgraded firmware;
after the image data is transferred successfully, sending a trial run new firmware command to the optical module, and indicating the optical module to execute the trial run of the new firmware;
after the optical module executes a trial run of the new firmware successfully, sending an image data commit command to the optical module, and committing the upgraded image data as default image data for the optical module starting the corresponding firmware.

The embodiment of the present invention further provides a firmware upgrade method, the optical module is configured with a firmware upgrade type identification register, wherein the firmware upgrade type identification register saves type identifications of firmwares whose upgrade is supported by the optical module, and the method comprises:
upon receiving a download instruction from an upper computer, according to the type of the upgraded firmware written by the upper computer into the firmware upgrade type identification register, executing the corresponding type of firmware upgrade processing.

Preferably, the executing the corresponding type of firmware upgrade processing comprises:
after receiving the download instruction sent by the upper computer, receiving image data of the to-be-upgraded firmware transferred by the upper computer, and after the image data are downloaded successfully, sending a download completed message to the upper computer;
upon receiving the trial run new firmware command sent by the the upper computer, according to the firmware type identification in the command, calling a corresponding type of firmware activation strategy via a unified interface to execute the trial run of the new firmware, and after the trial run is successful, sending the firmware trial run successful message to the upper computer;
after receiving the image data commit command sent by the upper computer, setting the upgraded image data as default image data for starting the corresponding firmware according to the commit command.

Preferably, the firmware upgrade type identification register is a reserved register of management data input/output MultiSource Agreement (MDIO MSA).

The embodiment of the present invention further provides an upper computer, an optical module is configured with a firmware upgrade type identification register, and the firmware upgrade type identification register saves type identifications of firmwares whose upgrade is supported by the optical module, and the upper computer comprises:
a type judging unit, configured to write a type identification of a to-be-upgraded firmware into a firmware upgrade type identification register corresponding to the optical module, and judging whether the optical module supports the type of the to-be-upgraded firmware by reading the firmware upgrade state register of the optical module;
a firmware upgrading unit, configured to execute a corresponding type of firmware upgrade processing on the optical module when the judgment result of the type judging unit represents that the optical module supports the type of the to-be-upgraded firmware.

Preferably, the type judging unit is configured to read an upgrade command execution state bit in the firmware upgrade state register of the optical module, if the read bit indicates that the command is executed successfully, determine that the optical module supports the upgrade of the firmware whose type corresponds to the written firmware type identification; if the command execution fails, read the upgrade command failure reason register in the firmware upgrade state register of the optical module, and if the reason register indicates that the firmware type is not supported, determine that the optical module does not support the upgrade of the firmware whose type corresponds to the written firmware type identification.

Preferably, the firmware upgrading unit comprises:
a data transmitting subunit, configured to send a download instruction to the optical module, and transfer image data of the to-be-upgraded firmware;
a firmware trial-run indicating subunit, configured to send a trial run new firmware command to the optical module after the image data is transferred successfully, and indicate the optical module to execute the trial run of the new firmware;
a data indicating subunit, configured to: after the optical module execute a trial run of the new firmware successfully, send an image data commit command to the optical module, and commit the upgraded image data as default image data for the optical module starting the corresponding firmware.

The embodiment of the present invention further provides an optical module, and the optical module is configured with a firmware upgrade type identification register, and the firmware upgrade type identification register saves the type identifications of firmwares whose upgrade is supported by the optical module, and the optical module further comprises:
an upgrade processing unit, configured to, when receiving a download instruction from the upper computer, according to the type of the upgraded firmware written by the upper computer in the firmware upgrade type identification register, execute the corresponding type of firmware upgrade processing.

Preferably, the upgrade processing unit comprises:
a data downloading subunit, configured to, after receiving the download instruction sent by the upper computer, receive image data of the to-be-upgraded firmware transmitted by the upper computer, and after the image data are downloaded successfully, send a download completed message to the upper computer;
a firmware trial run subunit, configured to, after receiving a trial run new firmware command sent by the upper computer, call the corresponding type of firmware activation strategy via a unified interface to execute the trial run of the new firmware according to the firmware type identification in the command, and after the trial run is successful, send a firmware trial run successful message to the upper computer;
a data commit subunit, configured to, after receiving the image data commit command sent by the upper computer, set the upgraded image data as default image data for starting the corresponding firmware according to the commit command.

Preferably, the firmware upgrade type identification register is a reserved register of management data input/output Multi-Source Agreement (MDIO MSA).

The embodiment of the present invention further provides a firmware upgrade system, wherein the system comprises the abovementioned upper computer, and an optical module;
the optical module is configured with a firmware upgrade type identification register, and the firmware upgrade type identification register saves type identifications of firmwares whose upgrade is supported by the optical module;
the upper computer is configured to write the type identification of the to-be-upgraded firmware into the firmware upgrade type identification register corresponding to the optical module, and judge whether the optical module supports the type of the to-be-upgraded firmware by reading the firmware upgrade state register of the optical module; when determining that the optical module supports the type of the to-be-upgraded firmware, execute the corresponding type of firmware upgrade processing on the optical module;
the optical module is configured to, when receiving the download command from the upper computer, execute the corresponding type of firmware upgrade processing according to the type of the upgraded firmware written by the upper computer into the firmware upgrade type identification register.

The embodiment of the present invention further provides a computer-readable storage medium, and the storage medium comprises a group of computer-executable instructions, and the instructions are used to execute the firmware upgrade method at the upper computer side.

The embodiment of the present invention further provides a computer-readable storage medium, and the storage medium comprises a group of computer-executable instructions, and the instructions are used to execute the firmware upgrade method at the optical module side.

The embodiment of the present invent provides a firmware upgrade method and system, an upper computer and an optical module, and it uses a reserved register in the MDIO MSA as a upgrade firmware type identification register, and multiplexes the online upgrade control and state register in the MDIO MSA, and unifies the state indication and control method in different firmware type upgrade processes; it improves the firmware upgrade control timing, and achieves the universality of the control process, the scalability of the firmware type and the reusability of the register.

### Brief Description of the Drawings

FIG. 1 is a timing chart of online software upgrade in the related art;
FIG. 2 is a timing chart of a firmware upgrade in accordance with an embodiment of the present invention;
FIG. 3 is a schematic diagram of a firmware activation in accordance with an embodiment of the present invention;
FIG. 4 is a schematic diagram of an internal online upgrade register bank in an optical module in accordance with an embodiment of the present invention;
FIG. 5 is a schematic diagram of a composition structure of a firmware upgrade system in accordance with an embodiment of the present invention.

### Preferred Embodiments

Hereinafter, in conjunction with the accompanying drawings and specific embodiments, the technical solution of the present invention will be described in detail.

In the firmware upgrade method provided in the embodiment of the present invention, an optical module is configured with a firmware upgrade type identification register, and the firmware upgrade type identification register saves type identifications of firmwares whose upgrade is supported by the optical module, wherein the method mainly comprises: writing a type identification of a to-be-upgraded firmware into a firmware upgrade type identification register corresponding to the optical module, and judging whether the optical module supports the type of the to-be-upgraded firmware by reading the firmware upgrade state register of the optical module; when determining that the optical module supports the type of the to-be-upgraded firmware, executing a corresponding type of firmware upgrade processing on the optical module.

The executive body of the method may be an upper computer, and the upgrade method can also be described as: the upper computer writing the type identification of the to-be-upgraded firmware into the firmware upgrade type identification register corresponding to the optical module, and by reading the firmware upgrade state register of the optical module, judging whether the optical module supports the type of the to-be-upgraded firmware or not; and executing the corresponding type of firmware upgrade processing on the optical module when determining that the type of the to-be-upgraded firmware is supported by the optical module.

In the embodiment of the present invention, it is possible to enable a reserved register in the MDIO MSA as the firmware upgrade type identification register; preferably, the reserved register B052 in the MDIO MSA can be set as a firmware upgrade type identification register, and 15-12 bits in the register can be used as the firmware upgrade type identification, and the corresponding values of specific types are shown in table 2 below. Table 2 lists three firmware types: MCU software image, FPGA logic image, and digital signal processer (DSP) chip image, of course, the embodiment of the present invention is not limited to these firmware types, and other firmware types can be extended based on these. Furthermore, in the embodiment of the present invention, an entry of not supported firmware types is added in the upgrade command failure reason bit information of the original register B051 in the MDIO MSA, whose corresponding values are shown in Table 3.

**Table 2**

| Hexadecimal address | Size (byte) | Access Type | Bit | Register Name/bit name | Description | Initial Value |
|---|---|---|---|---|---|---|
| B052 | 1 | | | Online upgrade firmware type identification | | |
| | | Read/Write | 15∼12 | Firmware Type | 0: MCU image | 0 |
| | | | | | 1: FPGA image | |
| | | | | | 2: DSP chip image | |
| | | | | | 3∼15: Reserved | |
| | | read | 11∼0 | Reserved | | 0 |

**table 3**

| | | | | | | |
|---|---|---|---|---|---|---|
| | | | | Module upgrade state | | 0000h |
| B051h | 1 | read | 15∼14 | Upgrade command execution state | 00: Idle | 00b |
| | | | | | 01: The command completes successfully | |
| | | | | | 10: The command is in execution | |
| | | | | | 11: The command fails | |
| | | | 13 | The state of service being affected when upgrading to the downloaded image | 0: Upgrading to the current downloaded image will not affect the service | 0b |
| | | | | | 1: Upgrading to the current downloaded image will affect the service | |
| | | | 12 | Image Run | 0: Image A | 0b |
| | | | | | 1: Image B | |
| | | | 11∼10 | Image A state | 00: No image | 00b |
| | | | | | 01: There is a valid image | |
| | | | | | 10: There is a damaged image | |
| | | | | | 11: Reserved | |
| | | | 9∼8 | Image B state | 00: No image | 00b |
| | | | | | 01: There is a valid image | |
| | | | | | 10: There is a damaged image | |
| | | | | | 11: Reserved | |
| | | | 7 | Image commit | 0: Image A | 0b |
| | | | | | 1: Image B | |
| | | | 6∼0 | Upgrade command failure reason | 0: No error | 0b |
| | | | | | 1: CRC checksum error | |
| | | | | | 2: Image length error | |
| | | | | | 3: Flash write operation error | |
| | | | | | 4: Firmware type is not supported | |
| | | | | | 5-127: Reserved | |

Since the register B052 is non-volatile, it resumes to its last set value after the power-down or reset and the reboot.

As a preferred embodiment of the present invention, the judging whether the optical module supports the type of the to-be-upgraded firmware by reading the firmware upgrade state register of the optical module comprises:
reading the upgrade command execution state bit in the firmware upgrade state register of the optical module, if the read bit indicates that the command is executed successfully, determining that the optical module supports the upgrade of the firmware whose type corresponds to the written firmware type identification; if the command execution fails, reading the upgrade command execution failure reason register in the firmware upgrade state register of the optical module, if the reason register indicates that the type of the firmware is not supported, determining that the optical module does not support the upgrade of the firmware whose type corresponds to the written firmware type identification.

When determining that the optical module supports the type of the to-be-upgraded firmware, the executing the corresponding type of firmware upgrade processing on the optical module comprises:
sending a download instruction to the optical module, and transmitting image data of the to-be-upgraded firmware;
after successfully transmitting the image data, sending a trial run new firmware command to the optical module to indicate the optical module to execute the trial run of the new firmware;
after the optical module trial runs the new firmware successfully, it sending an image data commit command to the optical module, and committing the upgraded image data as default image data for the optical module starting the corresponding firmware.

The embodiment of the present invention further provides a firmware upgrade method, configures a firmware upgrade type identification register in the optical module, wherein the firmware upgrade type identification register saves type identifications of the firmwares whose upgrade is supported by the optical module, and the method mainly comprises: upon receiving a download instruction from the upper computer, executing the corresponding type of firmware upgrade processing according to the type of the upgraded firmware written by the upper computer in the firmware upgrade type identification register.

The executive body of the method is the optical module, therefore, the upgrade method is also described as: when the optical module receives a download instruction from the upper computer, executing the corresponding type of the firmware upgrade processing according to the type of the upgraded firmware written by the upper computer in the firmware upgrade type identification register.

In the embodiment of the present invention, it is possible to enable one reserved register in the MDIO MSA as the firmware upgrade type identification register; preferably, the reserved register B052 in the MDIO MSA can be set as the firmware upgrade type identification register, and 15-12 bits in the register can be used as the firmware upgrade type identification, and the corresponding values of the specific types are shown in table 2. Since the register B052 is nonvolatile, it resumes to its last set value after the power-down or the reset and reboot.

As a preferred embodiment of the present invention, the optical module executing the corresponding type of firmware upgrade processing comprises:
after receiving a download instruction sent by the upper computer, receiving image data of the to-be-upgraded firmware transmitted by the upper computer, and after the image data are downloaded successfully, sending a download completed message to the upper computer;
after receiving the trial run new firmware command sent by the upper computer, according to the firmware type identification in the command, calling a corresponding type of firmware activation strategy via a unified interface to execute the trial run of the new firmware, and after the trial run is successful, sending a firmware trial run successful message to the upper computer;
after receiving the image data commit command sent by the upper computer, according to the commit command, setting the upgraded image data as the default image data for starting the corresponding firmware.

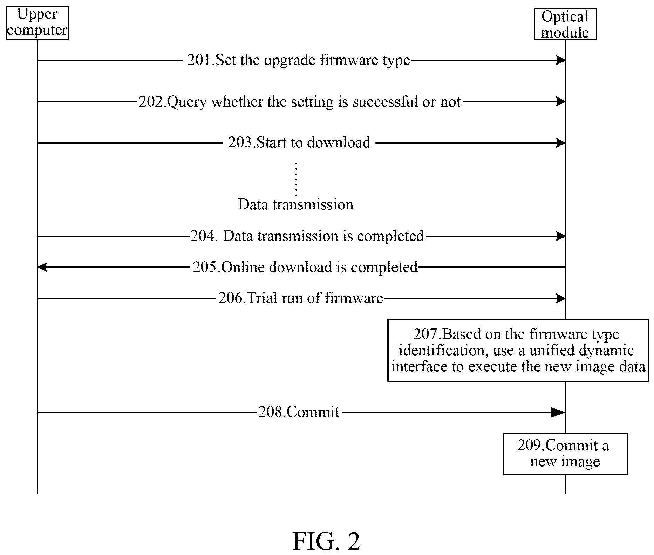

In the following, in combination with the timing chart shown in FIG. 2, the firmware upgrade process executed between the upper computer and the optical module will be described in further detail. The firmware upgrade process mainly comprises:
in step 201, the upper computer sets the upgrade firmware type in the optical module.

Specifically, the upper computer writes the type identification of the to-be-upgraded firmware into the firmware upgrade type identification register of the optical module.

In step 202, the upper computer queries whether the setting of the upgrade firmware type is successful or not.

Specifically, the upper computer reads the upgrade command execution state bit in the firmware upgrade state register of the optical module, if the read bit indicates that the command is executed successfully, it determines that the optical module supports the upgrade of the firmware whose type corresponds to the written firmware type identification; if the command is executed unsuccessfully, it reads the upgrade command execution failure reason register in the firmware upgrade state register of the optical module, and if the reason register indicates that the type of the firmware is not supported, it determines that the optical module does not support the upgrade of the firmware whose type corresponds to the written firmware type identification. After successfully setting the type of the to-be-upgraded firmware, it proceeds to the next steps; and after the setting of the type of the to-be-upgraded firmware fails, it terminates the operation.

In steps 203-205, the upper computer sends a download instruction to the optical module, and transmits image data of the to-be-upgraded firmware.

One possible data transmission process is: the upper computer segmenting the image data of the to-be-upgraded firmware into a plurality of data blocks, each data block should comprise a data portion and a cyclic redundancy checks (CRC) checksum; once any error occurs during the current data block receiving process, the optical module notifies the upper computer, and the upper computer re-transmits the data block; if the same data block has several CRC errors, the upper computer forcibly terminates the upgrade process. When all the image data packets are transmitted completely, the upper computer sends a data transmission completed command to terminate the transmission process; the optical module will confirm that the entire image has been successfully downloaded by sending an online download completed message. Errors in the download process are recorded and fed back by the state register of the optical module.

In step 206, after the image data is transferred successful, the upper computer transmits a trial run new firmware command to the optical module to indicate the optical module to execute the trial run of new firmware.

In step 207, after receiving the trial run new firmware command sent by the upper computer, the optical module calls the corresponding type of firmware activation strategy via a unified interface to execute the trial run of the new firmware according to the firmware type identification in the command, and after the trial run is successful, it sends a firmware trial run successful message to the upper computer.

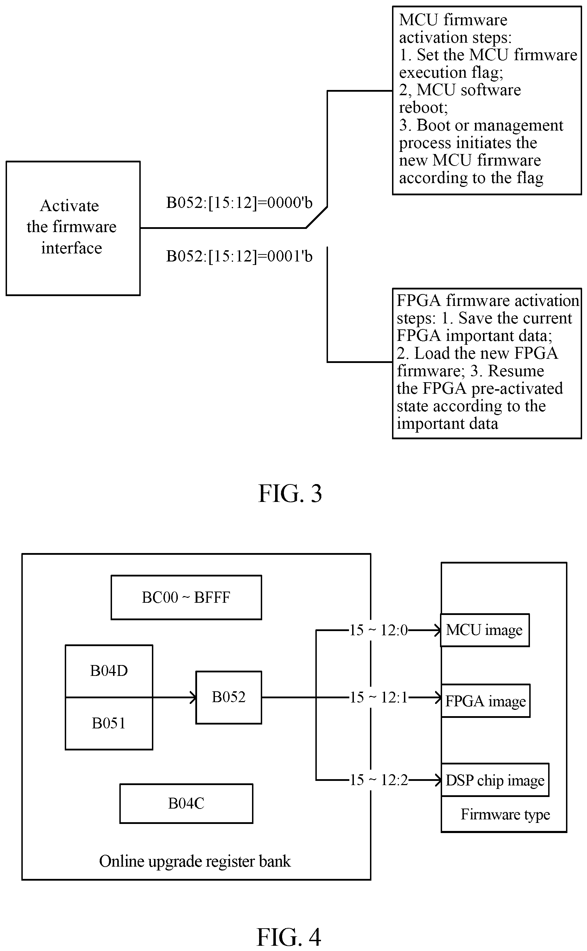

Since the activation methods of different image data will be different, the embodiment of the present invention uses the unified dynamic interface to call the corresponding type of firmware activation strategy to execute the trial run of the new firmware through the optical module using the firmware type identification in the command. Take the activation of the MCU image and the FPGA image for example, as shown in FIG. 3, when executing the trial run of the MCU image data, the optical module calls the unified firmware activation interface to execute the corresponding MCU firmware activation step, comprising: setting the MCU firmware run flag; the MCU software reboot; boot, or management process to initiate the new MCU firmware according to the flag. When executing the trial run of the FPGA image data, the optical module calls the unified activation firmware interface to execute the corresponding FPGA firmware activation steps, comprising: saving the current FPGA important data; loading the new FPGA firmware; replying the FPGA with the pre-activated state according to the important data.

In step 208, after the optical module successfully execute a trial run of the new firmware, the upper computer sends an image data commit command to the optical module, and commits the upgraded image data as the default image data for the optical module starting the corresponding firmware.

In step 209, after receiving the image data commit command sent by the upper computer, the optical module sets the upgraded image data as the default image data for starting the corresponding firmware according to the commit command.

Again, as shown in FIG. 4, FIG. 4 is a schematic diagram of an internal online upgrade register bank in the optical module. In the FIG. 4, the online upgrade register bank comprises: upgrade control register B051, state register B04D, data transmission control register B04C, data block storage register bank (BC00∼BFFF), and firmware upgrade type identification register B052. Wherein, the upgrade control register B051 is responsible for controlling the firmware online upgrade process of the optical module; the state register B04D is responsible for the state storage in the firmware online upgrade process; the data transmission control register B04C is responsible for data exchange with the upper computer; the data block storage register bank BC00 ∼ BFFF is responsible for data storage in the online upgrade process; the firmware upgrade type identification register B052 is responsible for saving the type identification of the firmware whose upgrade is supported by the optical module, for example: identification 0 in FIG. 4 represents the MCU image type, identification 1 represents the FPGA image type and identification 2 represents the DSP chip image type. The upper computer can execute the read/write operation on the firmware upgrade type identification register B052 of the optical module, and the write operation on the data block storage register bank, and so on.

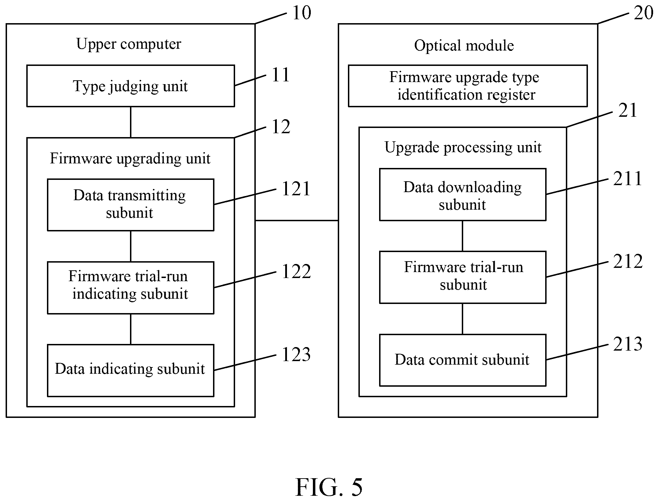

Corresponding to the abovementioned firmware upgrade method, the embodiment of the present invention further provides a firmware upgrade system, as shown in FIG. 5, the system comprises: the upper computer 10 and optical module 20;
wherein, the optical module 20 is configured with a firmware upgrade type identification register, and the firmware upgrade type identification register saves type identifications of firmwares whose upgrade is supported by the optical module;
the upper computer 10 is configured to write the type identification of the to-be-upgraded firmware into the firmware upgrade type identification register corresponding to the optical module 20, and judge whether the optical module 20 supports the type of the to-be-upgraded firmware by reading the firmware upgrade state register of the optical module 20; when determining that the optical module 20 supports the type of the to-be-upgraded firmware, execute the corresponding type of firmware upgrade processing on the optical module 20;
the optical module 20 is configured to, when receiving a download instruction from the upper computer 10, execute the corresponding type of firmware upgrade processing according to the type of the upgraded firmware written by the upper computer 10 into the firmware upgrade type identification register.

Preferably, the upper computer 10 comprises:
a type judging unit 11, configured to write a type identification of the to-be-upgraded firmware into a firmware upgrade type identification register corresponding to the optical module 20, and judge whether the optical module 20 supports the type of the to-be-upgraded firmware by reading the firmware upgrade state register of the optical module 20;
the firmware upgrading unit 12 is configured to execute the corresponding type of firmware upgrade processing on the optical module 20 when the judgment result of the type judging unit 11 represents that the optical module 20 supports the type of the to-be-upgraded firmware.

Preferably, the type judging unit 11 is configured to read the upgrade command execution state bit in the firmware upgrade state register of the optical module 20, if the read bit indication command is executed successfully, determine that the optical module 20 supports the upgrade of the firmware whose type corresponds to the written firmware type identification; if the command execution fails, read the upgrade command execution failure reason register in the firmware upgrade state register of the optical module 20, and if the reason register indicates that the firmware type is not supported, determine that the optical module 20 does not support the upgrade of the firmware whose type corresponds to the written firmware type identification. Preferably, the firmware upgrading unit 12 comprises:
a data transmitting subunit 121, configured to send a download instruction to the optical module 20, and transmit image data of the to-be-upgraded firmware;
a firmware trial-run indicating subunit 122, configured to send a trial run new firmware command to the optical module after the image data are transmitted successfully, and indicate the optical module 20 to execute the trial run of the new firmware;
data indicating subunit 123, configured to, after the optical module successfully execute a trial run of the new firmware, send an image data commit command to the optical module 20, and commit the upgraded image data as default image data for the optical module 20 starting the corresponding firmware.

Preferably, the optical module 20 further comprises: an upgrade processing unit 21, configured to, when receiving a download instruction from the upper computer 10, execute the corresponding type of firmware upgrade processing according to the type of the upgraded firmware written by the upper computer 10 into the firmware upgrade type identification register.

Preferably, the upgrade processing unit 21 comprises:
a data downloading subunit 211, configured to, after receiving the download instruction sent by the upper computer 10, receive image data of the to-be-upgraded firmware transmitted by the upper computer 10, and send a download completed message to the upper computer 10 after the image data are downloaded successfully;
a firmware trial run sub-unit 212, configured to, after receiving a trial run new firmware command sent by the upper computer 10, execute the trial run of the new firmware by calling the corresponding type of firmware activation strategy via a unified interface according to the firmware type identification in the command, and after the trial run is successful, send a firmware trial run successful message to the upper computer 10;
a data commit subunit 213, configured to, after receiving the image data commit command sent by the upper computer 10, set the upgraded image data as default image data for starting the corresponding firmware according to the commit command.

The type judging unit 11, the firmware upgrading unit 12, and the data transmitting subunit 121, the firmware trial run indicating subunit 122 and the data indicating subunit 123 can be implemented by the Central Processing Unit (CPU), a Micro Processing Unit (MPU), a digital signal processor (DSP) or a Field-programmable Gate array (FPGA) of the upper computer;
the upgrade processing unit 21, as well as the data downloading subunit 211, the firmware trial run subunit 212 and the data commit subunit 213 may be implemented by the CPU, the MPU, the DSP or the FPGA of the optical module.

The embodiment of the present invention further provides a computer-readable storage medium, and the storage medium comprises a group of computer-executable instructions, and the instructions are used to execute the firmware upgrade method at the upper computer side.

The embodiment of the present invention further provides a computer-readable storage medium, and the storage medium comprises a group of computer-executable instructions, and the instructions are used to execute the firmware upgrade method at the optical module side.

In summary, the embodiment of the present invent uses one reserved register in the MDIO MSA as a upgrade firmware state register to reflect the current online upgrade firmware types supported by the optical module and control the online upgrade firmware types; it multiplexes the online upgrade control and state register in the MDIO MSA, and adds online upgrade command execution failure reason information in the existing online upgrade state register to unify the state indication and control method in different firmware type upgrade processes; it adds a firmware type judgment in the upgrade control timing, and performs different treatments depending on different types of the upgraded firmware, to improve the firmware upgrade control timing, achieve the universality of the control process, the scalability of the firmware type and the reusability of the register, which is conducive to the extendibility when adding firmware types in the future, extending the scope of the MDIO MSA. Adding the online firmware upgrade type identification register saves the resources of reserved registers in the MDIO MSA, greatly ensuring the scalability; the reusability of the online upgrade control timing is improved, and the implementation complexity is reduced.

The above description is only the preferred embodiments of the present invention, and is not intended to limit the protection scope of the present invention.

## Claims

1. A firmware upgrade method, applied in Management Data Input/Output, MDIO, Multi Source Agreement, MSA, an optical module configured with a firmware upgrade type identification register, and the firmware upgrade type identification register saving type identifications of firmwares whose upgrade is supported by the optical module, wherein the method comprises:
writing a type identification of a to-be-upgraded firmware into a firmware upgrade type identification register corresponding to the optical module, **characterized in that**, a type of the to-be-upgraded firmware represented by the type identification comprises: a Micro Control Unit, MCU, software image type, a Field Programmable Gate Array, FPGA, logic image type and a digital signal processer, DSP, chip image type; and judging whether the optical module supports the type of the to-be-upgraded firmware by reading a firmware upgrade state register of the optical module; when determining that the optical module supports the type of the to-be-upgraded firmware, executing a corresponding type of firmware upgrade processing on the optical module;
the judging whether the optical module supports the type of the to-be-upgraded firmware by reading the firmware upgrade state register of the optical module comprises:
reading an upgrade command execution state bit in the firmware upgrade state register of the optical module, if the read bit indicates that a command is executed successfully, determining that the optical module supports the upgrade of a firmware whose type corresponds to a written firmware type identification; if the execution of the command fails, reading an upgrade command execution failure reason register in the firmware upgrade state register of the optical module, if the reason register indicates that the type of the firmware is not supported, determining that the optical module does not support the upgrade of the firmware whose type corresponds to the written firmware type identification (S201, 202, 203).

2. The firmware upgrade method of claim 1, wherein, the executing the corresponding type of firmware upgrade processing on the optical module comprises:
sending a download instruction to the optical module, and transferring image data of the to-be-upgraded firmware;
after the image data is transferred successfully, sending a trial run new firmware command to the optical module, and indicating the optical module to execute a trial run of a new firmware;
after the optical module executes a trial run of the new firmware successfully, sending an image data commit command to the optical module, and committing the upgraded image data as default image data for the optical module starting a corresponding firmware (S204).

3. The firmware upgrade method according to claim 2, upon receiving the download instruction from an upper computer, according to the type of upgraded firmware written by the upper computer into the firmware upgrade type identification register, executing a corresponding type of firmware upgrade processing (S205).

4. The firmware upgrade method of claim 3, wherein the executing the corresponding type of firmware upgrade processing comprises:
after receiving the download instruction sent by the upper computer, receiving the image data of to-be-upgraded firmware transferred by the upper computer, and after the image data are downloaded successfully, sending a download completed message to the upper computer;
upon receiving a trial run new firmware command sent by the upper computer, according to a firmware type identification in the command, calling a corresponding type of firmware activation strategy via a unified interface to execute a trial run of the new firmware, and after the trial run is successful, sending a firmware trial run successful message to the upper computer;
after receiving an image data commit command sent by the upper computer, setting the upgraded image data as default image data for starting a corresponding firmware according to the commit command.

5. The firmware upgrade method of claim 3 or 4, wherein, the firmware upgrade type identification register is a reserved register of management data input/output MultiSource Agreement (MDIO MSA).

6. An upper computer (10), applied in Management Data Input/Output, MDIO, Multi Source Agreement, MSA, an optical module (20) configured with a firmware upgrade type identification register, the firmware upgrade type identification register saving type identifications of firmwares whose upgrade is supported by the optical module, wherein the upper computer comprises:
a type judging unit (11), configured to write a type identification of a to-be-upgraded firmware into a firmware upgrade type identification register corresponding to the optical module, **characterized in that**, a type of the to-be-upgraded firmware represented by the type identification comprises: a Micro Control Unit, MCU, software image type, a Field Programmable Gate Array, FPGA, logic image type and a digital signal processer, DSP, chip image type; and judging whether the optical module supports the type of the to-be-upgraded firmware by reading a firmware upgrade state register of the optical module;
a firmware upgrading unit (12), configured to execute a corresponding type of firmware upgrade processing on the optical module (20)when a judgment result of the type judging unit represents that the optical module supports the type of the to-be-upgraded firmware;
**characterized in that**, the type judging unit (11) is further configured to read an upgrade command execution state bit in the firmware upgrade state register of the optical module (20), if the read bit indicates that a command is executed successfully, determine that the optical module supports the upgrade of a firmware whose type corresponds to a written firmware type identification; if the execution of the command fails, read an upgrade command execution failure reason register in the firmware upgrade state register of the optical module (20), and if the reason register indicates that a firmware type is not supported, determine that the optical module (20) does not support the upgrade of the firmware whose type corresponds to the written firmware type identification.

7. The upper computer of claim 6, wherein, the firmware upgrading unit (12) comprises:
a data transmitting subunit(121), configured to send a download instruction to the optical module (20), and transfer image data of the to-be-upgraded firmware;
a firmware trial-run indicating subunit (122), configured to send a trial run new firmware command to the optical module (20) after the image data is transferred successfully, and indicate the optical module (20) to execute a trial run of a new firmware;
a data indicating subunit (123), configured to, after the optical module (20) executes a trial run of the new firmware successfully, send an image data commit command to the optical module (20), and commit the upgraded image data as default image data for the optical module(20) starting a corresponding firmware.

8. The upper computer of claim 6 or 7, wherein the optical module (20) is configured with a firmware upgrade type identification register, and the firmware upgrade type identification register saves type identifications of firmwares whose upgrade is supported by the optical module (20), and the optical module (20) further comprises:
an upgrade processing unit (21), configured to, when receiving the download instruction from the upper computer (10), according to the type of upgraded firmware written by the upper computer in the firmware upgrade type identification register, execute a corresponding type of firmware upgrade processing.

9. The upper computer of claim 8, wherein, the upgrade processing unit (21) comprises:
a data downloading subunit (211), configured to, after receiving the download instruction sent by the upper computer (10), receive image data of a to-be-upgraded firmware transmitted by the upper computer, and after the image data are downloaded successfully, send a download completed message to the upper computer (10);
a firmware trial run subunit (212), configured to, after receiving the trial run new firmware command sent by the upper computer (10), call a corresponding type of firmware activation strategy via a unified interface to execute a trial run of the new firmware according to a firmware type identification in the command, and after the trial run is successful, send a firmware trial run successful message to the upper computer (10);
a data commit subunit (213), configured to, after receiving the image data commit command sent by the upper computer (10), set the upgraded image data as default image data for starting a corresponding firmware according to the commit command.

10. The upper computer of claim 8 or 9, wherein, the firmware upgrade type identification register is a reserved register of management data input/output Multi-Source Agreement (MDIO MSA).

11. A firmware upgrade system, wherein the system comprises the upper computer (10) of any one of claims 6-10; the optical module (20) is configured with a firmware upgrade type identification register, and the firmware upgrade type identification register saves type identifications of firmwares whose upgrade is supported by the optical module (20);
the optical module (20) is configured to, when receiving a download instruction from the upper computer, execute a corresponding type of firmware upgrade processing according to the type of an upgraded firmware written by the upper computer (10) into the firmware upgrade type identification register.

12. A computer-readable storage medium, wherein the storage medium comprises a group of computer-executable instructions, and the instructions are used to execute the firmware upgrade method of any one of claims 1-5.

## Patentansprüche

1. Firmware-Aktualisierungsverfahren, in einer Mehrquellenfestlegung (MSA) von Eingabe/Ausgabe von Verwaltungsdaten (MDIO) angewendet, ein optisches Modul, das mit einem Firmware-Aktualisierungstypidentifikationsregister eingerichtet ist, und das Firmware-Aktualisierungstypidentifikationsregister speichert Typidentifikationen von Firmwares, deren Aktualisierung vom optischen Modul unterstützt ist, worin das Verfahren umfasst:
Schreiben einer Typidentifikation einer zu aktualisierenden Firmware in ein Firmware-Aktualisierungstypidentifikationsregister hinein, das dem optischen Modul entspricht, **dadurch gekennzeichnet, dass** ein Typ der zu aktualisierenden Firmware, der von der Typidentifikation repräsentiert ist, umfasst: eine Mikrosteuereinheit (MCU), des Software-Abbildtyps, ein feldprogrammierbares Gate-Array (FPGA), des Logik-Abbildtyps, und einen Digitalsignalprozessor (DSP), des Chip-Abbildtyps; und Beurteilen, ob das optische Modul den Typ der zu aktualisierenden Firmware durch das Lesen eines Firmware-Aktualisierungszustandsregisters des optischen Moduls unterstützt; wenn es bestimmt wird, dass das optische Modul den Typ der zu aktualisierenden Firmware unterstützt, Durchführen eines entsprechenden Typs von Firmware-Aktualisierungsverarbeitung am optischen Modul;
das Beurteilen, ob das optische Modul den Typ der zu aktualisierenden Firmware durch das Lesen des Firmware-Aktualisierungszustandsregisters des optischen Moduls unterstützt, umfasst:
Lesen eines Aktualisierungsbefehlsausführungs-Zustandsbits im Firmware-Aktualisierungszustandsregister des optischen Moduls, wenn das gelesene Bit angibt, dass ein Befehl erfolgreich ausgeführt ist, Bestimmen, dass das optische Modul die Aktualisierung einer Firmware unterstützt, deren Typ einer geschriebenen Firmware-Typidentifikation entspricht; wenn die Ausführung des Befehls scheitert, Lesen eines Registers der Gründe für Aktualisierungsbefehlsausführungsversagen im Firmware-Aktualisierungszustandsregister des optischen Moduls, wenn das Register der Gründe angibt, dass der Typ der Firmware nicht unterstützt ist, Bestimmen, dass das optische Modul die Aktualisierung der Firmware nicht unterstützt, deren Typ der geschriebenen Firmware-Typidentifikation entspricht (S201, 202, 203).

2. Firmware-Aktualisierungsverfahren nach Anspruch 1, worin das Durchführen des entsprechenden Typs von Firmware-Aktualisierungsverarbeitung am optischen Modul umfasst:
Senden einer Herunterladen-Anweisung an das optische Modul und Übermitteln von Bilddaten der zu aktualisierenden Firmware;
nachdem die Bilddaten erfolgreich übermittelt sind, Senden eines Neufirmware-Probelauf-Befehls an das optische Modul, und Anweisen des optischen Moduls, einen Probelauf einer neuen Firmware durchzuführen;
nachdem das optische Modul einen Probelauf der neuen Firmware erfolgreich durchführt, Senden eines Bilddaten-Festschreibungsbefehls an das optische Modul, und Festschreiben der aktualisierten Bilddaten als Default-Bilddaten für das optische Modul, das eine entsprechende Firmware startet (S204).

3. Firmware-Aktualisierungsverfahren nach Anspruch 2, beim Empfang der Herunterladen-Anweisung von einem übergeordneten Computer, je nach dem Typ der aktualisierten Firmware, die vom übergeordneten Computer in das Firmware-Aktualisierungstypidentifikationsregister geschrieben ist, Durchführen eines entsprechenden Typs von Firmware-Aktualisierungsverarbeitung (S205).

4. Firmware-Aktualisierungsverfahren nach Anspruch 3, worin das Durchführen des entsprechenden Typs von Firmware-Aktualisierungsverarbeitung umfasst:
nach Empfang der Herunterladen-Anweisung, die vom übergeordneten Computer gesandt wird, Empfang der Bilddaten von zu aktualisierender Firmware, die vom übergeordneten Computer übermittelt werden, und nachdem die Bilddaten erfolgreich heruntergeladen sind, Senden einer Herunterladen-Abgeschlossen-Nachricht an den übergeordneten Computer;
beim Empfang eines Neufirmware-Probelauf-Befehls, der vom übergeordneten Computer gesandt wird, je nach einer Firmware-Typidentifikation im Befehl, Abrufen eines entsprechenden Typs von Firmware-Aktivierungsstrategie über eine vereinheitlichte Schnittstelle, um einen Probelauf der neuen Firmware durchzuführen, und nachdem der Probelauf erfolgreich ist, Senden einer Firmware-Probelauf-Erfolgreich-Nachricht an den übergeordneten Computer;
nach Empfang eines Bilddaten-Festschreibungsbefehls, der vom übergeordneten Computer gesandt wird, Festsetzen der aktualisierten Bilddaten als Default-Bilddaten zum Starten einer entsprechenden Firmware gemäß dem Festschreibungsbefehl.

5. Firmware-Aktualisierungsverfahren nach Anspruch 3 oder 4, worin das Firmware-Aktualisierungstypidentifikationsregister ein reserviertes Register von einer Mehrquellenfestlegung der Eingabe/Ausgabe von Verwaltungsdaten (MDIO MSA) ist.

6. Übergeordneter Computer (10), in einer Mehrquellenfestlegung (MSA) von Eingabe/Ausgabe von Verwaltungsdaten (MDIO) angewendet, ein optisches Modul (20), das mit einem Firmware-Aktualisierungstypidentifikationsregister eingerichtet ist, das Firmware-Aktualisierungstypidentifikationsregister speichert Typidentifikationen von Firmwares, deren Aktualisierung vom optischen Modul unterstützt ist, worin der übergeordnete Computer umfasst:
eine Typbeurteilungseinheit (11), die dafür eingerichtet ist, um eine Typidentifikation einer zu aktualisierenden Firmware in ein Firmware-Aktualisierungstypidentifikationsregister hinein zu schreiben, das dem optischen Modul entspricht, **dadurch gekennzeichnet, dass** ein Typ der zu aktualisierenden Firmware, der von der Typidentifikation repräsentiert ist, umfasst: eine Mikrosteuereinheit (MCU), des Software-Abbildtyps, ein feldprogrammierbares Gate-Array (FPGA), des Logik-Abbildtyps, und einen Digitalsignalprozessor (DSP), des Chip-Abbildtyps; und Beurteilen, ob das optische Modul den Typ der zu aktualisierenden Firmware durch das Lesen eines Firmware-Aktualisierungszustandsregisters des optischen Moduls unterstützt;
eine Firmware-Aktualisierungseinheit (12), die dafür eingerichtet ist, um einen entsprechenden Typ von Firmware-Aktualisierungsverarbeitung am optischen Modul (20) durchzuführen, wenn ein Beurteilungsergebnis der Typbeurteilungseinheit repräsentiert, dass das optische Modul den Typ der zu aktualisierenden Firmware unterstützt;
**dadurch gekennzeichnet, dass** die Typbeurteilungseinheit (11) ferner dafür eingerichtet ist, um ein Aktualisierungsbefehlsausführungs-Zustandsbit im Firmware-Aktualisierungszustandsregister des optischen Moduls (20) dann zu lesen, wenn das gelesene Bit angibt, dass ein Befehl erfolgreich ausgeführt ist, zu bestimmen, dass das optische Modul die Aktualisierung einer Firmware unterstützt, deren Typ einer geschriebenen Firmware-Typidentifikation entspricht; wenn die Ausführung des Befehls scheitert, ein Register der Gründe für Aktualisierungsbefehlsausführungsversagen im Firmware-Aktualisierungszustandsregister des optischen Moduls (20) zu lesen, und wenn das Register der Gründe angibt, dass ein Firmware-Typ nicht unterstützt ist, zu bestimmen, dass das optische Modul (20) die Aktualisierung der Firmware nicht unterstützt, deren Typ der geschriebenen Firmware-Typidentifikation entspricht.

7. Übergeordneter Computer nach Anspruch 6, worin die Firmware-Aktualisierungseinheit (12) umfasst:
eine Datenübermittlungsuntereinheit (121), die dafür eingerichtet ist, um eine Herunterladen-Anweisung an das optische Modul (20) zu senden und Bilddaten der zu aktualisierenden Firmware zu übermitteln;
eine Firmware-Probelauf-Angebe-Untereinheit (122), die dafür eingerichtet ist, um einen Neufirmware-Probelauf-Befehl an das optische Modul (20) zu senden, nachdem die Bilddaten erfolgreich übermittelt sind, und das optische Modul (20) anzuweisen, einen Probelauf einer neuen Firmware durchzuführen;
eine Daten-Angebe-Untereinheit (123), die dafür eingerichtet ist, um, nachdem das optische Modul (20) einen Probelauf der neuen Firmware erfolgreich durchführt, einen Bilddaten-Festschreibungsbefehl an das optische Modul (20) zu senden, und die aktualisierten Bilddaten als Default-Bilddaten für das optische Modul (20) festzuschreiben, das eine entsprechende Firmware startet.

8. Übergeordneter Computer nach Anspruch 6 oder 7, worin das optische Modul (20) mit einem Firmware-Aktualisierungstypidentifikationsregister eingerichtet ist, und das Firmware-Aktualisierungstypidentifikationsregister Typidentifikationen von Firmwares speichert, deren Aktualisierung vom optischen Modul (20) unterstützt ist, und das optische Modul (20) ferner umfasst:
eine Aktualisierungsverarbeitungseinheit (21), die dafür eingerichtet ist, um, beim Empfang der Herunterladen-Anweisung von dem übergeordneten Computer (10), je nach dem Typ der aktualisierten Firmware, die vom übergeordneten Computer in dem Firmware-Aktualisierungstypidentifikationsregister geschrieben ist, einen entsprechenden Typ von Firmware-Aktualisierungsverarbeitung durchzuführen.

9. Übergeordneter Computer nach Anspruch 8, worin die Aktualisierungsverarbeitungseinheit (21) umfasst:
eine Datenherunterladen-Untereinheit (211), die dafür eingerichtet ist, um, nach Empfang der Herunterladen-Anweisung, die vom übergeordneten Computer (10) gesandt wird, Bilddaten von einer zu aktualisierenden Firmware zu empfangen, die vom übergeordneten Computer übermittelt sind, und nachdem die Bilddaten erfolgreich heruntergeladen sind, eine Herunterladen-Abgeschlossen-Nachricht an den übergeordneten Computer (10) zu senden;
eine Firmware-Probelauf-Untereinheit (212), die dafür eingerichtet ist, um, nach dem Empfang des Neufirmware-Probelauf-Befehls, der vom übergeordneten Computer (10) gesandt wird, einen entsprechenden Typ von Firmware-Aktivierungsstrategie über eine vereinheitlichte Schnittstelle abzurufen, um einen Probelauf der neuen Firmware je nach einer Firmware-Typidentifikation im Befehl durchzuführen, und nachdem der Probelauf erfolgreich ist, eine Firmware-Probelauf-Erfolgreich-Nachricht an den übergeordneten Computer (10) zu senden;
eine Datenfestschreibungsuntereinheit (213), die dafür eingerichtet ist, um, nach Empfang des Bilddaten-Festschreibungsbefehls, der vom übergeordneten Computer (10) gesandt wird, die aktualisierten Bilddaten als Default-Bilddaten zum Starten einer entsprechenden Firmware gemäß dem Festschreibungsbefehl festzusetzen.

10. Übergeordneter Computer nach Anspruch 8 oder 9, worin das Firmware-Aktualisierungstypidentifikationsregister ein reserviertes Register von einer Mehrquellenfestlegung der Eingabe/Ausgabe von Verwaltungsdaten (MDIO MSA) ist.

11. Firmware-Aktualisierungssystem, worin das System den übergeordneten Computer (10) nach einem der Ansprüche 6-10 umfasst;
das optische Modul (20) ist mit einem Firmware-Aktualisierungstypidentifikationsregister eingerichtet, und das Firmware-Aktualisierungstypidentifikationsregister speichert Typidentifikationen von Firmwares, deren Aktualisierung vom optischen Modul (20) unterstützt ist;
das optische Modul (20) ist dafür eingerichtet, um, beim Empfang einer Herunterladen-Anweisung von dem übergeordneten Computer, je nach dem Typ der aktualisierten Firmware, die vom übergeordneten Computer (10) in das Firmware-Aktualisierungstypidentifikationsregister geschrieben ist, einen entsprechenden Typ von Firmware-Aktualisierungsverarbeitung durchzuführen.

12. Computerlesbares Speichermedium, worin das Speichermedium eine Gruppe von computerausführbaren Anweisungen umfasst, und die Anweisungen verwendet sind, um das Firmware-Aktualisierungsverfahren nach einem der Ansprüche 1-5 durchzuführen.

## Revendications

1. Méthode de mise à niveau d'un microprogramme, appliquée dans MDIO (*Management Data InputlOutput*)*,* MSA (*Multi Source Agreement*), un module optique configuré avec un registre d'identification du type de mise à niveau du microprogramme, et le registre d'identification du type de mise à niveau du microprogramme enregistrant les identifications du type de microprogrammes, dont la mise à niveau est supportée par le module optique, où le module comprend les étapes consistant à :
écrire une identification du type d'un microprogramme à mettre à niveau dans un registre d'identification du type de mise à niveau du microprogramme correspondant au module optique, **caractérisée en ce qu'**un type de microprogramme à mettre à niveau représenté par l'identification du type comprend : un microcontrôleur, MCU, un type d'image logiciel, un réseau prédiffusé programmable par l'utilisateur, FPGA, un type d'image logique et un processeur de signaux numériques, DSP, un type d'image puce ; et déterminer si le module optique supporte le type de microprogramme à mettre à niveau en lisant un registre d'état de mise à niveau du microprogramme du module optique ; lors de la détermination si le module optique supporte le type de microprogramme à mettre à niveau, exécuter un correspondant type de traitement de mise à niveau du microprogramme sur le module optique ;
la détermination si le module optique supporte le type de microprogramme à mettre à niveau en lisant le registre d'état de mise à niveau du microprogramme du module optique comprend les étapes consistant à :
lire un bit d'état d'exécution de la commande de mise à niveau dans le registre d'état de mise à niveau du microprogramme du module optique, si le bit de lecture indique qu'une commande est exécutée avec succès, déterminer si le module optique supporte la mise à niveau d'un microprogramme dont le type correspond à une identification écrite du type de microprogramme ; en cas d'échec de l'exécution de la commande, lire un registre de motifs d'échec de l'exécution de la commande de mise à niveau dans le registre d'état de mise à niveau du microprogramme du module optique, si le registre de motifs indique que le type du microprogramme n'est pas supporté, déterminer si le module optique ne supporte pas la mise à niveau du microprogramme dont le type correspond à l'identification écrite du type de microprogramme (S201, 202, 203).

2. Méthode de mise à niveau d'un microprogramme selon la revendication 1, où l'exécution du correspondant type de traitement de mise à niveau du microprogramme sur le module optique comprend les étapes consistant à :
envoyer une instruction de téléchargement au module optique et transférer des données d'image du microprogramme à mettre à niveau ;
après que les données d'image ont été transférées avec succès, envoyer une commande de série de tests de nouveau microprogramme au module optique, et indiquer au module optique d'exécuter une série de tests d'un nouveau microprogramme ;
après que le module optique a effectué avec succès une série de tests du nouveau microprogramme, envoyer une commande de validation des données d'image au module optique et valider les données d'image mises à niveau en tant que données d'image par défaut pour le module optique démarrant un microprogramme correspondant (S204).

3. Méthode de mise à niveau d'un microprogramme selon la revendication 2, lors de la réception de l'instruction de téléchargement d'un ordinateur supérieur, selon le type de microprogramme mis à niveau écrit par l'ordinateur supérieur dans le registre d'identification du type de mise à niveau du microprogramme, exécutant un type de traitement de mise à niveau du microprogramme correspondant (S205).

4. Méthode de mise à niveau d'un microprogramme selon la revendication 3, où l'exécution du type de traitement de mise à niveau du microprogramme correspondant comprend les étapes consistant à :
après la réception de l'instruction de téléchargement envoyée par l'ordinateur supérieur, recevoir les données d'image du microprogramme à mettre à niveau transférées par l'ordinateur supérieur, et après que les données d'image ont été téléchargées avec succès, envoyer un message de téléchargement terminé à l'ordinateur supérieur ;
lors de la réception d'une commande de série de tests de nouveau microprogramme envoyée par l'ordinateur supérieur, selon une identification du type de microprogramme dans la commande, appeler un type de stratégie d'activation du microprogramme correspondant via une interface unifiée pour exécuter une série de tests du nouveau microprogramme, et après que la série de tests a réussi, envoyer un message que la série de tests du microprogramme a réussi à l'ordinateur supérieur ;
après la réception d'une commande de validation des données d'image envoyée par l'ordinateur supérieur, définir les données d'image mises à niveau en tant que données d'image par défaut pour démarrer un microprogramme correspondant selon la commande de validation.

5. Méthode de mise à niveau d'un microprogramme selon la revendication 3 ou 4, où le registre d'identification du type de mise à niveau du microprogramme est un registre réservé de MDIO MSA (*Management Data Input*/*Output MultiSource Agreement*)*.*

6. Ordinateur supérieur (10) appliqué dans MDIO (*Management Data Input*/*Output*)*,* MSA (*Multi Source Agreement*), un module optique (20) configuré avec un registre d'identification du type de mise à niveau du microprogramme, le registre d'identification du type de mise à niveau du microprogramme enregistrant les identifications du type de microprogrammes, dont la mise à niveau est supportée par le module optique, où l'ordinateur supérieur comprends :
une unité d'évaluation (11) du type configurée pour écrire une identification du type d'un microprogramme à mettre à niveau dans un registre d'identification du type de mise à niveau du microprogramme correspondant au module optique, **caractérisé en ce qu'**un type de microprogramme à mettre à niveau représenté par l'identification du type comprend : un microcontrôleur, MCU, un type d'image logiciel, un réseau prédiffusé programmable par l'utilisateur, FPGA, un type d'image logique et un processeur de signaux numériques, DSP, un type d'image puce ; et déterminer si le module optique supporte le type de microprogramme à mettre à niveau en lisant un registre d'état de mise à niveau du microprogramme du module optique ;
une unité de mise à niveau du microprogramme (12), configurée pour exécuter un type de traitement de mise à niveau du microprogramme correspondant sur le module optique (20) lorsqu'un résultat d'évaluation de l'unité d'évaluation du type indique que le module optique supporte le type de microprogramme à mettre à niveau ;
**caractérisé en ce que**, l'unité d'évaluation (11) du type est en outre configurée pour lire un bit d'état d'exécution de la commande de mise à niveau dans le registre d'état de mise à niveau du microprogramme du module optique (20), si le bit de lecture indique qu'une commande est exécutée avec succès, déterminer si le module optique supporte la mise à niveau d'un microprogramme dont le type correspond à une identification écrite du type de microprogramme ; en cas d'échec de l'exécution de la commande, lire un registre de motifs d'échec de l'exécution de la commande de mise à niveau dans le registre d'état de mise à niveau du microprogramme du module optique (20), et si le registre de motifs indique que un type de microprogramme n'est pas supporté, déterminer si le module optique (20) ne supporte pas la mise à niveau du microprogramme dont le type correspond à l'identification écrite du type de microprogramme.

7. Ordinateur supérieur selon la revendication 6, où l'unité de mise à niveau du microprogramme (12) comprend :
une sous-unité de transmission (121) des données, configurée pour envoyer une instruction de téléchargement au module optique (20), et transférer des données d'image du microprogramme à mettre à niveau ;
une sous-unité d'indication (122) d'une série de tests du microprogramme, configurée pour envoyer une commande de série de tests de nouveau microprogramme au module optique (20) après que les données d'image ont été transférées avec succès, et indiquer au module optique (20) d'exécuter une série de tests d'un nouveau microprogramme ;
une sous-unité d'indication (123) des données configurée pour, après que le module optique (20) a exécuté avec succès une série de tests du nouveau microprogramme, envoyer une commande de validation des données d'image au module optique (20) et valider les données d'image mises à niveau en tant que données d'image par défaut pour le module optique (20) démarrant un microprogramme correspondant.

8. Ordinateur supérieur selon la revendication 6 ou 7, où le module optique (20) est configuré avec un registre d'identification du type de mise à niveau du microprogramme, et le registre d'identification du type de mise à niveau du microprogramme enregistre les identifications du type de microprogrammes dont la mise à niveau est supportée par le module optique (20), et le module optique (20) comprend en outre :
une unité de traitement de mise à niveau (21), configurée pour, lors de la réception de l'instruction de téléchargement de l'ordinateur supérieur (10), selon le type de microprogramme mis à niveau écrit par l'ordinateur supérieur dans le registre d'identification du type de mise à niveau du microprogramme, exécuter un type de traitement de mise à niveau du microprogramme correspondant.

9. Ordinateur supérieur selon la revendication 8, où l'unité de traitement de mise à niveau (21) comprend :
une sous-unité de téléchargement (211) des données configurée pour, après la réception de l'instruction de téléchargement envoyée par l'ordinateur supérieur (10), recevoir les données d'image d'un microprogramme à mettre à niveau transmises par l'ordinateur supérieur, et après que les données d'image ont été téléchargées avec succès, envoyer un message de téléchargement terminé à l'ordinateur supérieur (10) ;
une sous-unité d'une série de tests (212) du microprogramme, configurée pour, après la réception de la commande de série de tests de nouveau microprogramme envoyée par l'ordinateur supérieur (10), appeler un type de stratégie d'activation du microprogramme correspondant via une interface unifiée pour exécuter une série de tests du nouveau microprogramme selon une identification du type de microprogramme dans la commande, et après que la série de tests a réussie, envoyer un message à l'ordinateur supérieur (10) indiquant que la série de tests du microprogramme a réussi ;
une sous-unité de commande de validation (213) des donnée configurée pour, après la réception d'une commande de validation des données d'image envoyée par l'ordinateur supérieur (10), définir les données d'image mises à niveau en tant que données d'image par défaut pour démarrer un microprogramme correspondant selon la commande de validation.

10. Ordinateur supérieur selon la revendication 8 ou 9, où le registre d'identification du type de mise à niveau du microprogramme est un registre réservé de MDIO MSA (*Management Data Input*/*Output Multi-Source Agreement*)*.*

11. Système de mise à niveau d'un microprogramme, où le système comprend l'ordinateur supérieur (10) selon l'une quelconque des revendications 6 à 10;
le module optique (20) est configuré avec un registre d'identification du type de mise à niveau du microprogramme, et le registre d'identification du type de mise à niveau du microprogramme enregistre les identifications du type de microprogrammes dont la mise à niveau est supportée par le module optique (20) :
le module optique (20) est configuré pour, lors de la réception d'une instruction de téléchargement de l'ordinateur supérieur, exécuter un type de traitement de mise à niveau du microprogramme correspondant selon le type de microprogramme mis à niveau écrit par l'ordinateur supérieur (10) dans le registre d'identification du type de mise à niveau du microprogramme.

12. Support de stockage lisible par ordinateur, où le support de stockage comprend un groupe d'instructions exécutables par ordinateur, et les instructions sont utilisées pour exécuter la méthode de mise à niveau du microprogramme selon l'une quelconque des revendications 1 à 5.
